(19) Europäisches Patentamt
European Patent Office
Office européen des brevets

(11) Veröffentlichungsnummer: **0 043 037**
**B1**

(12) **EUROPÄISCHE PATENTSCHRIFT**

(45) Veröffentlichungstag der Patentschrift: **27.07.83**

(51) Int. Cl.³: **B 01 F 3/12**, B 01 F 17/00, G 03 C 7/26

(21) Anmeldenummer: **81104696.0**

(22) Anmeldetag: **19.06.81**

(54) **Dispergierverfahren.**

(30) Priorität: **01.07.80 DE 3024881**

(43) Veröffentlichungstag der Anmeldung:
**06.01.82 Patentblatt 82/1**

(45) Bekanntmachung des Hinweises auf die Patenterteilung:
**27.07.83 Patentblatt 83/30**

(84) Benannte Vertragsstaaten:
**BE CH DE FR GB IT LI**

(56) Entgegenhaltungen:
**DD-A-139 040**
**DE-A-2 728 357**
**GB-A-1 496 701**
**US-A-2 322 027**
**US-A-3 689 271**
**US-A-4 009 038**

(73) Patentinhaber: **AGFA-GEVAERT Aktiengesellschaft, D-5090 Leverkusen 1 (DE)**

(72) Erfinder: **Nittel, Fritz, Dr., Emil-Nolde-Strasse 76, D-5090 Leverkusen 1 (DE)**
Erfinder: **Mäder, Helmut, Dr., Theodor-Storm-Weg 1, D-5068 Odenthal (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

# Dispergierverfahren

Die Erfindung betrifft die Herstellung einer Dispersion einer hydrophoben Substanz in einem wäßrigen Medium unter Anwendung eines mehrstufigen Dispergierverfahrens.

Es ist bekannt, hydrophobe Substanzen wie Farbkuppler, UV-Absorber, Stabilisatoren und dergl. zusammen mit einem hochsiedenden Lösungsmittel (Ölbildner) und einem niedrigsiedenden Hilfslösungsmittel zu lösen und in Form einer derartigen Lösung in einem wäßrigen Medium, z. B. einer wäßrigen Lösung eines hydrophilen Bindemittels zu dispergieren. Nach Entfernung des niedrig siedenden Hilfslösungsmittels liegt dann die hydrophobe Substanz in dem wäßrigen Medium in Form kleiner Partikel oder Tröpfchen des Ölbildners vor, die die hydrophobe Substanz eingeschlossen enthalten. Das Verfahren ist in dem US-Patent 2 322 027 erstmalig beschrieben.

Dieses Verfahren zur Dispergierung hydrophober Substanzen hat sich grundsätzlich in dieser Form bis in die Gegenwart durchgesetzt, obschon in der Folge hinsichtlich der als Ölbildner zu verwendenden Substanzen eine Reihe von weiteren Stoffklassen vorgeschlagen worden ist.

Die Stabilität der nach diesem Verfahren erhaltenen Dispersionen der zu dispergierenden hydrophoben Substanzen in dem wäßrigen Medium hängt von der Art des Ölbildners, den im einzelnen verwendeten Verfahrensbedingungen und nicht zuletzt von der Kristallisationstendenz der zu dispergierenden hydrophoben Substanzen ab. Es hat sich gezeigt, daß die hergestellten Dispersionen bei Anwendung des Verfahrens in großem Maßstab, insbesondere bei hohen Stoffdurchsätzen, nicht immer die erwünschte Stabilität aufweisen. Offenbar handelt es sich bei vielen dieser Dispersionen um metastabile Systeme, in denen die dispergierten hydrophoben Substanzen in Form von gesättigten oder gar übersättigten Lösungen in dem Ölbildner vorliegen und daher bei Lagerung (4° C) oder Digestion (40° C) mehr oder weniger schnell zur Rekristallisation neigen. Ein Auskristallisieren der dispergierten hydrophoben Substanzen kann vielfach schon nach kurzer Zeit beobachtet werden und verursacht dann, beispielsweise bei Verwendung derartiger Dispersionen in photographischen Materialien, eine deutliche Verschlechterung der sensitometrischen Eigenschaften, wie etwa der Empfindlichkeit und der maximalen Farbdichte.

Obwohl die Ursachen hierfür nicht bis ins letzte geklärt sind, wird vermutet, daß sie insbesondere in der Verfahrensstufe zu suchen sind, bei der das niedrig siedende Hilfslösungsmittel entfernt wird. Wenn dies nicht unter schonenden Bedingungen geschieht, z. B. in einem Dünnschichtdampfer, sondern wenn zur Erzielung eines großen Durchsatzes ohne Verschäumung etwa Fallstromvakuumverdampfer mit hoher Ballastdampfeinspritzung verwendet werden, dann dürften wohl bei der abrupten Entfernung des niedrig siedenden Hilfslösungsmittels die zuvor gebildeten, aus hydrophober Substanz, Ölbildner und niedrig siedendem Lösungsmittel bestehenden Tröpfchen aufgebrochen und Spuren hydrophober Substanz unter Bildung von Kristallkeimen in die wäßrige Phase der Umgebung gelangen, wo dann, begünstigt durch die wenn auch befristete Anwesenheit des niedrig siedenden Lösungsmittels sowie gegebenenfalls durch die solubilisierende Wirkung von Netzmitteln oder Dispergiermitteln, mehr oder weniger schnell Kristallwachstum eintritt. Hier wirkt sich besonders nachteilig aus, daß relativ hohe Konzentrationen an Netzmitteln und Dispergiermitteln (ca. 5 bis 10%, bezogen auf die ölige Phase) offenbar notwendig sind, um feinverteilte, nicht mehr zur Agglomeration neigende Dispersionen zu erhalten.

Man hat auch bereits versucht, der hohen Kristallisationsneigung der zu dispergierenden Substanzen und der dadurch bedingten Instabilität der Dispersionen durch Einsatz größerer Ölbildnermengen oder bestimmter Ölbildnertypen entgegenzuwirken. Hierdurch wird jedoch gleichzeitig auch die Reaktionsbereitschaft der dispergierten Substanzen in oft unerwünschter Weise beeinflußt, z. B. die Kupplungskinetik eines emulgierten Kupplers. Mehrere gegebenenfalls nebeneinander in der Schicht vorliegende Substanzen lassen sich dann in ihrer Reaktivität nur schwer aufeinander abstimmen, ganz abgesehen davon, daß eine Erhöhung der Ölbildnermenge eine höhere Schichtbelastung bedeutet oder eine größere Schichtdicke erforderlich macht.

Die der Erfindung zugrunde liegende Aufgabe besteht darin, mit hohem Durchsatz stabile Dispersionen von hydrophoben Substanzen in wäßrigem Medium herzustellen.

Gegenstand der Erfindung ist ein Verfahren zur Herstellung einer Dispersion einer hydrophoben Substanz in einem wäßrigen Medium unter Verwendung eines Ölbildners und eines Hilfslösungsmittels, dadurch gekennzeichnet, daß in einer Hauptdispergierstufe unter Verwendung des Hilfslösungsmittels die Gesamtmenge der hydrophoben Substanz gegebenenfalls zusammen mit einem Teil der Gesamtmenge des Ölbildners in dem wäßrigen Medium dispergiert wird, und daß in mindestens einer der Hauptdispergierstufe vor- oder nachgeschalteten weiteren Dispergierstufe mindestens ein Teil der Gesamtmenge des Ölbildners in dem wäßrigen Medium dispergiert wird.

Kennzeichnend für das erfindungsgemäße Verfahren ist somit, daß es mehrere, d. h. mindestens zwei Dispergierstufen umfaßt, und zwar eine Hauptdispergierstufe, in der die hydrophobe Substanz dispergiert wird, sowie mindestens eine zeitlich vor- oder nachgeschaltete weitere Dispergierstufe, in der im wesentlichen nur Ölbildner dispergiert wird. Das erfindungsgemäße Verfahren umfaßt somit insgesamt mindestens zwei Dispergierstufen, wovon eine die Hauptdispergierstufe ist und die zweite entweder eine Vordispergierstufe oder eine Nachdispergierstufe. Es können aber auch, wenn auch

weniger bevorzugt, neben der Hauptdispergierstufe sowohl eine Vordispergierstufe als auch eine Nachdispergierstufe zur Anwendung gelangen.

In der Hauptdispergierstufe wird die Gesamtmenge der zu dispergierenden hydrophoben Substanz in bekannter Weise in dem wäßrigen Medium dispergiert. Hierzu wird die hydrophobe Substanz im allgemeinen in einem niedrig siedenden, mit Wasser im wesentlichen nicht mischbaren Lösungsmittel (Hilfslösungsmittel) gelöst und in Form dieser Lösung in dem wäßrigen Medium dispergiert. Brauchbare Hilfslösungsmittel sind etwa Ethylacetat oder Diethylcarbonat. Bei dem Hilfslösungsmittel kann es sich auch um ein Gemisch mehrerer Flüssigkeiten handeln, wobei darin gegebenenfalls auch eine kleinere Menge, z. B. bis 10%, eines niedrig siedenden, mit Wasser mischbaren Lösungsmittels, z. B. Ethanol oder Aceton, enthalten sein kann. Insgesamt gilt aber für das Hilfslösungsmittel, daß es im wesentlichen mit Wasser nicht mischbar ist und einen niedrigen Siedepunkt, z. B. unter 100°C bei Normaldruck hat. Die in der Hauptdispergierstufe mit dem wäßrigen Medium vermischte Lösung kann aber neben der zu dispergierenden hydrophoben Substanz und dem Hilfslösungsmittel auch einen Ölbildner enthalten, wie dies auch aus dem herkömmlichen Dispergierverfahren geläufig ist. Die Menge des in der Hauptdispergierstufe zugesetzten Ölbildners beträgt erfindungsgemäß beispielsweise bis zu 1 Gewichtsteil pro Gewichtsteil der zu dispergierenden hydrophoben Substanz.

In manchen Fällen ist es vorteilhaft, in der Hauptdispergierstufe keinen Ölbildner einzusetzen. Dies ist dann der Fall, wenn die durch Kombination von z. B. Farbkuppler und Ölbildner entstehende übersättigte Lösung gegen mechanische Belastung empfindlich ist und auskristallisiert. Eine solche Belastung kann z. B. durch Zahnradpumpen entstehen, die bei modernen Gießmaschinen eingesetzt werden. Bei Weglassen des Ölbildners aus der Hauptdispergierstufe reagieren die dann als unterkühlte Schmelze vorliegenden Kupplertröpfchen oft weniger empfindlich auf solche Belastungen.

Bei den Ölbildnern handelt es sich um Substanzen, die im allgemeinen über 180°C (bei Normaldruck) sieden und für die zu dispergierende hydrophobe Substanz ein gutes Lösungsvermögen haben. Hierbei kann es sich um hydrophobe Ölbildner handeln oder um Ölbildner, bei denen der hydrophobe Charakter aufgrund der Anwesenheit hydrophiler Gruppen, wie Hydroxyl- oder Carboxylgruppen weniger deutlich ausgeprägt ist und die daher zur Unterscheidung von den bekannten hydrophoben Ölbildnern als »hydrophile« Ölbildner bezeichnet werden sollen. Als Beispiele für hydrophobe Ölbildner werden die Ester von Glutarsäure, Adipinsäure, Phthalsäure, Sebacinsäure, Bernsteinsäure, Maleinsäure, Fumarsäure, Isophthalsäure, Terephthalsäure und Phosphorsäure oder die Ester von Glycerin, sowie Paraffin und fluoriertes Paraffin bevorzugt verwendet, weil diese Verbindungen chemisch beständig und sehr leicht zugänglich sind, sehr leicht gehandhabt werden können und bei Verwendung der Dispersionen für photographische Zwecke keinen nachteiligen Einfluß auf die lichtempfindlichen Materialien haben. Als hydrophobe Ölbildner werden erfindungsgemäß besonders bevorzugt die folgenden verwendet: Triarylphosphate wie Trikresylphosphat, Triphenylphosphat, Dialkylphthalate wie Dibutylphthalat, Di-n-hexylphthalat, Di-n-octylphthalat, Di-n-nonylphthalat, Di-n-dodecylphthalat, Di-2-ethylhexylphthalat, Glycerintributyrat, Glycerintripropionat, Dioctylsebacat, Paraffin und fluoriertes Paraffin. Als besonders vorteilhaft haben sich des weiteren wegen ihres abgestuften hydrophoben Charakters auch die bereits erwähnten hydrophilen Ölbildner erwiesen, z. B. Monoester der Bernsteinsäure, die in einer $\alpha$-Stellung des Bernsteinsäureesters einen aliphatischen Rest mit mindestens 8 Kohlenstoffatomen tragen, oder Monoester von Phthalsäuren oder hydrierten Phthalsäuren. Derartige Verbindungen sind in US-A-3 689 271 beschrieben. Beim Einsatz solcher Verbindungen in der Vordispergierstufe kann beispielsweise die Menge des sonst erforderlichen Dispergiermittels erheblich gesenkt werden. Auch beim Einsatz in der Nachdispergierstufe erweisen sie sich den bekannten hydrophoben Ölbildnern überlegen. Als hydrophile Ölbildner eignen sich ferner auch aliphatische oder cycloaliphatische Alkohole mit mindestens 10 Kohlenstoffatomen, sofern sie mit Wasserdampf nicht oder nur wenig flüchtig sind, z. B. Hydroxymethylderivate des Tricyclo[5.2.1.0$^{2,6}$]decans.

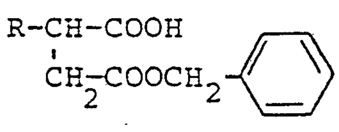

(1)

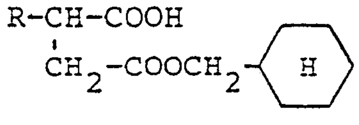

(2)

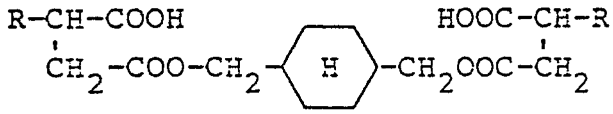

(3)

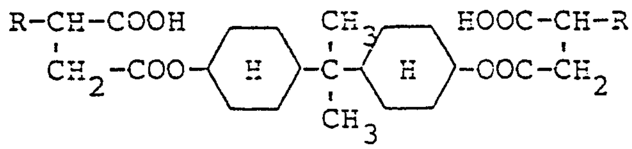

(4)

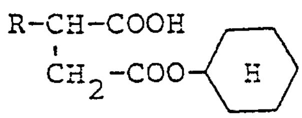

(5)

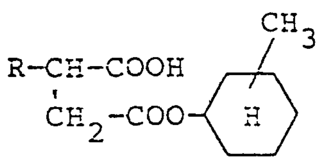

(6)

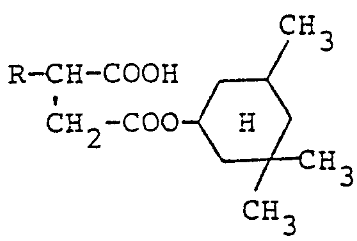

(7)

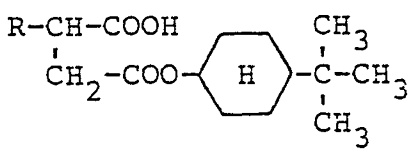

(8)

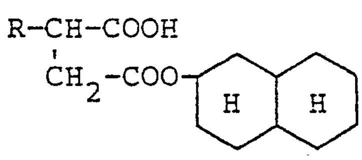

(9)

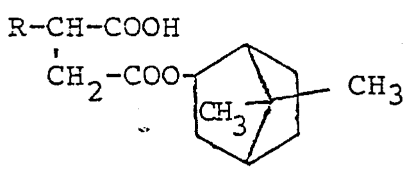

(10)

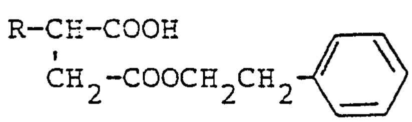

(11)

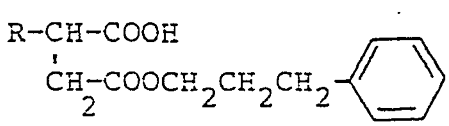

(12)

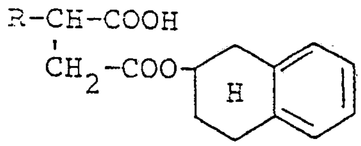

(13)

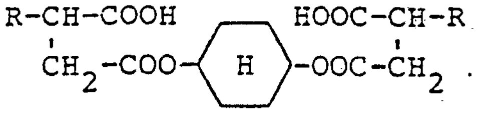

(14)

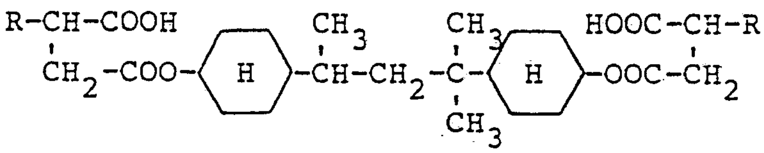

(15)

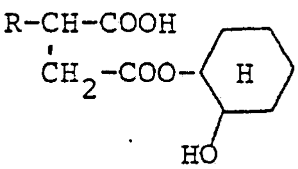

(16)

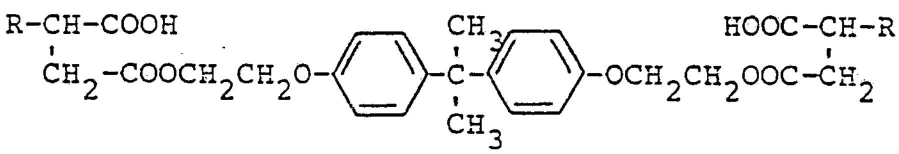

(17)

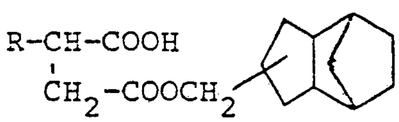

(18)

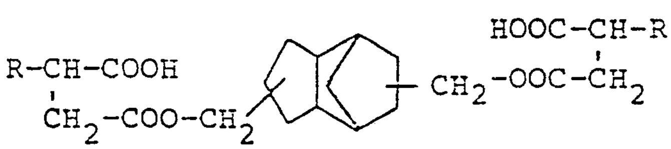

(19)

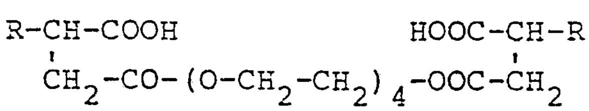

(20)

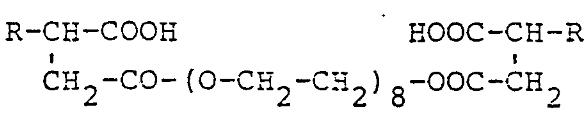

(21)

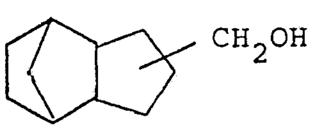

(22)

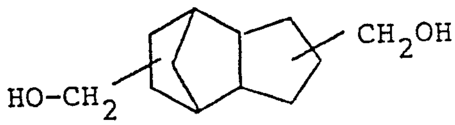

(23)

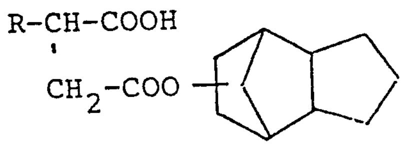

(24)

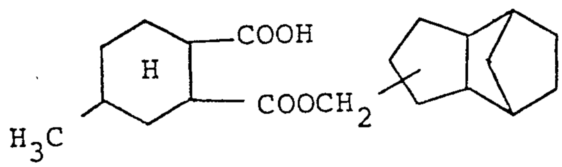

(25)

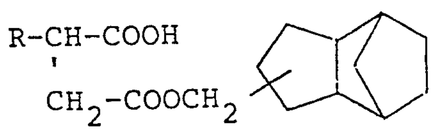

(26)

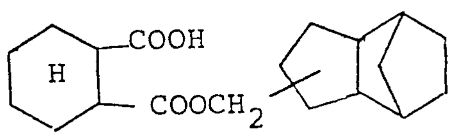

(27)

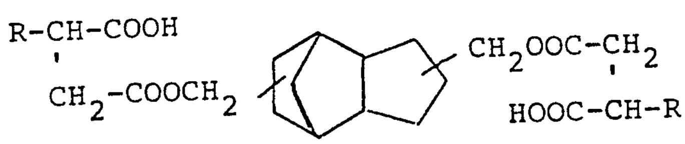

(28)

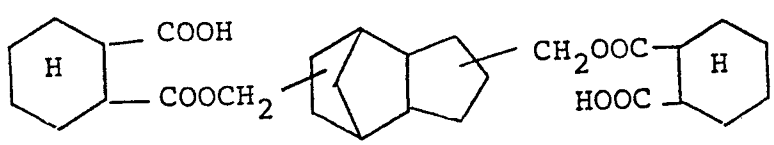

(29)

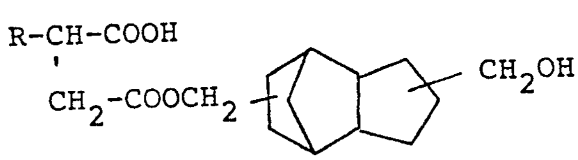

(30)

Isomerengemisch

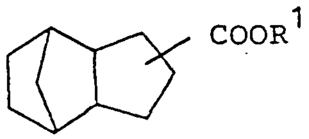

(31)

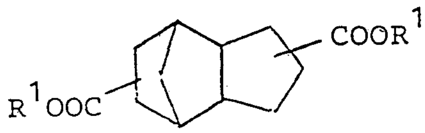

(32)

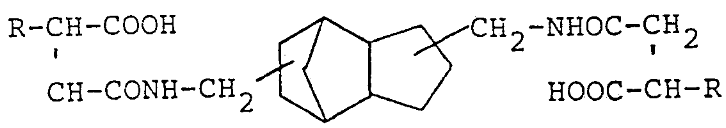

(33)

$CH_3-(CH_2)_{10-12}-CH_2OH$

(34)
Homologengemisch

$CH_3-(CH_2)_{12}-CH_2-OH$

(35)
Myristylalkohol

$CH_3-(CH_2)_{10}-CH_2OH$

(36)
Dodecanol

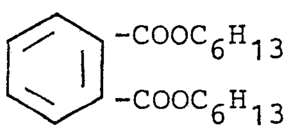

(37)

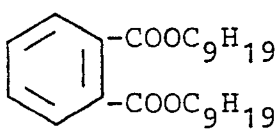

(38)

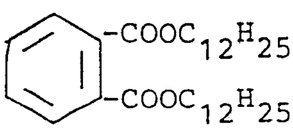

(39)

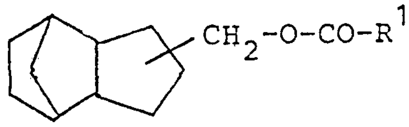

(40)

In den angegebenen Formeln 1 bis 21, 24, 26, 28, 30 und 33 steht das Symbol R für einen längeren aliphatischen Rest mit mindestens 8 Kohlenstoffatomen. Vorzugsweise handelt es sich hierbei um

einen der folgenden, einfach ungesättigten aliphatischen Reste $-C_{12}H_{23}$, $-C_{15}H_{29}$ oder $-C_{18}H_{35}$, deren Zustandekommen durch mehrfache Addition von Propylen erklärt werden kann. In den Formeln 31, 32 und 40 steht $R^1$ für einen aliphatischen Rest mit 8 bis 18 Kohlenstoffatomen oder für einen Benzylrest.

Bei den verwendeten Ölbildnern handelt es sich nicht notwendigerweise um eine einzelne Substanz, sondern es können auch Abmischungen mehrerer Substanzen der genannten Art zur Verwendung kommen, z. B. Abmischungen hydrophober Ölbildner mit aliphatischen oder cycloaliphatischen Alkoholen und/oder mit Monoestern von in $\alpha$-Stellung substituierten Bernsteinsäuren oder von hydrierten Phthalsäuren, ferner auch Abmischungen von Monoestern von Bernsteinsäuren oder hydrierten Phthalsäuren mit aliphatischen oder cycloaliphatischen Alkoholen (ohne hydrophobe Ölbildner).

Sofern bei der erfindungsgemäßen Hauptdispergierstufe überhaupt Ölbildner zur Anwendung gelangen, handelt es sich keinesfalls um die Gesamtmenge des bei dem erfindungsgemäßen Verfahren insgesamt verwendeten Ölbildners, sondern allenfalls um einen Teil davon, z. B. bis zu 80 Gew.-% der Gesamtmenge des Ölbildners. Der restliche Teil, oder aber überhaupt die Gesamtmenge des Ölbildners wird erfindungsgemäß in einer Vordispergierstufe oder einer Nachdispergierstufe oder verteilt auf die beiden zuletzt genannten Verfahrensstufen eingesetzt. Vor- und Nachdispergierstufe sind erfindungsgemäß dadurch gekennzeichnet, daß in diesen Verfahrensstufen lediglich Ölbildner, aber nicht die zu dispergierende hydrophobe Substanz in dem wäßrigen Medium dispergiert wird. Der in der Vor- bzw. Nachdispergierstufe zur Verwendung gelangende Ölbildner muß auch nicht notwendigerweise nach Art oder Zusammensetzung identisch sein mit demjenigen der Hauptdispergierstufe, sondern kann den jeweiligen Anforderungen entsprechend variiert werden. Beispielsweise weisen die zuvor formelmäßig dargestellten Bernsteinsäuremonoester eine schwache Emulgatorwirkung auf, so daß auf einen Teil der sonst erforderlichen Netzmittel und Dispergiermittel verzichtet werden kann, was sich beispielsweise als besonders günstig erweist, falls die hergestellte Dispersion zur Herstellung photographischer Schichten verwendet wird. Hohe Netzmittelkonzentrationen beeinflussen die Schichtbildungseigenschaften photographischer Gießlösungen oft in nachteiliger Weise. Des weiteren begünstigen die zuvor genannten Verbindungen aufgrund ihres hydrophileren Charakters die chromogene Entwicklung mit hydrophilen Entwicklersubstanzen wie etwa N-Butyl-N-$\omega$-sulfobutyl-p-phenylendiamin. Und schließlich vermögen sie bei Verwendung in der Nachdispergierstufe Kristallkeime der zu dispergierenden Substanz zu binden und damit unschädlich zu machen, die in der Hauptdispergierstufe in der wäßrigen Phase entstanden sind. In allen diesen Eigenschaften sind sie den herkömmlich verwendeten Ölbildnertypen überlegen.

Auch in der Vor- und Nachdispergierstufe wird zweckmäßigerweise ein Hilfslösungsmittel verwendet, um eine möglichst feinteilige Dispersion des Ölbildners in dem wäßrigen Medium zu erzielen.

Das erfindungsgemäße Verfahren eignet sich in hervorragender Weise dazu, von hydrophoben Substanzen, insbesondere solchen mit erhöhter Kristallisationstendenz, Dispersionen in einem wäßrigen Medium herzustellen. Beispiele von solchen hydrophoben Substanzen sind beispielsweise hydrophobe Kuppler der verschiedensten Arten (4-Äquivalentkuppler, 2-Äquivalentkuppler, DIR-Kuppler, Maskenkuppler, Weißkuppler, Konkurrenzkuppler), Farbstoffe oder sonstige farbgebende Verbindungen, z. B. für das Farbdiffusionsübertragungsverfahren, UV-Absorber, Stabilisiermittel und andere photographische Zusätze. Die Erfindung ist aber keineswegs auf das Gebiet der photographischen Chemie beschränkt, sondern bietet sich auch für andere Gebiete der Technik an, z. B. überall dort, wo von hydrophoben Wirkstoffen, insbesondere solchen mit hoher Kristallisationsneigung, feinteilige stabile Dispersionen in wäßrigen Medien hergestellt werden sollen.

Das wäßrige Medium ist im einfachsten Fall Wasser, dem zur Verbesserung der Stabilität der Dispersionen hydrophile kolloidale Bindemittel, z. B. Gelatine, zugesetzt sein können. Die Gelatine kann auch ganz oder teilweise durch andere natürliche, synthetische oder halbsynthetische Bindemittel ersetzt werden, z. B. durch Derivate der Alginsäure oder der Cellulose, durch Polyvinylalkohol, Polyacrylate, teilweise verseiftes Polyvinylacetat oder Polyvinylpyrrolidon. In diesem wäßrigen Medium, z. B. einer wäßrigen Gelatinelösung, werden nun nacheinander in getrennten Verfahrensstufen die verschiedenen Lösungsansätze für die Vor-, Haupt- bzw. Nachdispergierstufe dispergiert. Üblicherweise verwendet man hierzu, um stabile und nicht mehr zur Agglomeration neigende Dispergate zu erhalten, eine beträchtliche Menge von Netzmitteln oder Dispergierhilfsmitteln, die beispielsweise 5 bis 10%, bezogen auf die zu dispergierende Ölphase, betragen. Bei Verwendung der formelmäßig dargestellten Bernsteinsäuremonoester, insbesondere wenn sie bereits in der Vordispergierstufe eingesetzt werden, gelingt es oft, den Gehalt an Netzmitteln oder Dispergiermitteln beträchtlich, z. B. auf $1/5$ bis $1/8$ der konventionell gebräuchlichen Menge zu reduzieren.

Es wurde bereits ausgeführt, daß während der Vor- und der Nachdispergierstufe dem wäßrigen Medium Ölbildner ohne die zu dispergierende hydrophobe Substanz zugesetzt wird. Hieraus geht klar hervor, daß mit der hydrophoben Substanz eine Wirksubstanz gemeint ist, die verschieden ist von den jeweils verwendeten Ölbildnern. Die »hydrophobe Substanz« ist diejenige Substanz, die dem wäßrigen Medium ausschließlich in der Hauptdispergierstufe des erfindungsgemäßen Verfahrens zugesetzt wird. Diese hydrophobe Substanz wird dem wäßrigen Medium also weder in der

Vordispergierstufe noch in der Nachdispergierstufe zugefügt. Dies schließt jedoch nicht aus, daß andere hydrophobe Substanzen, die ebenfalls von dem Ölbildner verschieden sind, in dem wäßrigen Medium, beispielsweise in der erfindungsgemäßen Nachdispergierstufe, dispergiert werden. Bei dieser anderen hydrophoben Substanz kann es sich um Schichtzusätze handeln, die aber die erfindungsgemäße Funktion des Ölbildners in der Nachdispergierstufe nicht behindern dürfen. Beispiele für solche andere hydrophoben Substanzen sind etwa UV-Absorber oder Weißkuppler, die etwa zusätzlich zu einem in der Hauptdispergierstufe in das wäßrige Medium eingebrachten Kuppler in der nach dem erfindungsgemäßen Verfahren hergestellten Dispersion enthalten sind.

1. Herstellung der Dispersion (allgemeine Vorschrift)

1.1. Zweistufeneinlauf mit vordispergierten Ölbildnern.
In 1 l einer 10%igen wäßrigen Gelatinelösung, die 20 ml einer 10%igen wäßrigen Lösung von Di-sec-butylnaphthalinsulfonsäure-Natriumsalz (Dispergiermittel) enthält, werden mit einem Intensivrührer (z. B. Mischsirene der Firma Kotthoff) nacheinander dispergiert:

1.1.1. Vordispergat (VD)

5—200 g Ölbildner, z. B. eine der Substanzen der Formeln 1—33 und
5—200 g Hilfslösungsmittel (z. B. Ethylacetat oder Diethylcarbonat)
Nachrührzeit 5 Minuten

1.1.2. Hauptdispergat (HD)

100 g hydrophobe Substanz, z. B. Kuppler
0—100 g Ölbildner
100—200 g Hilfslösungsmittel
Nachrührzeit 5 Minuten — anschließend wird das Gemisch über einen Hochdruckhomogenisator (Fa. Knollenberg oder Sonic) gegeben.

1.2. Zweistufeneinlauf mit nachdispergierten Ölbildnern

In 1 l einer 10%igen Gelatinelösung werden nacheinander dispergiert:

1.2.1. Hauptdispergat (HD)

100 g hydrophobe Substanz
100—200 g Hilfslösungsmittel
0—100 g Ölbildner
Nachrührzeit 5 Minuten

1.2.2. Nachdispergat (ND)

5—200 g Ölbildner
5—200 g Hilfslösungsmittel
Nachrührzeit 5 Minuten
Weiter wie bei 1.1.

1.3. Dreistufeneinlauf

In 1 l 10%iger Gelatinelösung werden nacheinander dispergiert.

1.3.1. VD wie bei 1.1.1.

1.3.2. HD wie bei 1.1.2. oder 1.2.1.

1.3.3. ND wie bei 1.2.2.

Es können auch andere Dispergiermittel und Hilfslösungsmittel zur Anwendung gelangen.

2. Beispiele

Es wurden nach der erfindungsgemäßen Methode von verschiedenen hydrophoben Substanzen Dispergate hergestellt und deren Stabilität bei Digestion bei 40°C ermittelt. Zum Vergleich wurden auch die Stabilitäten von nach herkömmlichen Verfahren hergestellten Dispergaten ermittelt. Als Hilfslösungsmittel wurde Diethylcarbonat verwendet. Die Dispergiermittel und die zu dispergierenden hydrophoben Substanzen sind jeweils gesondert angegeben. Es wird auf die nachfolgenden Tabellen verwiesen.

2.1. Beispielreihe 1

Blaugrünkuppler der Formel

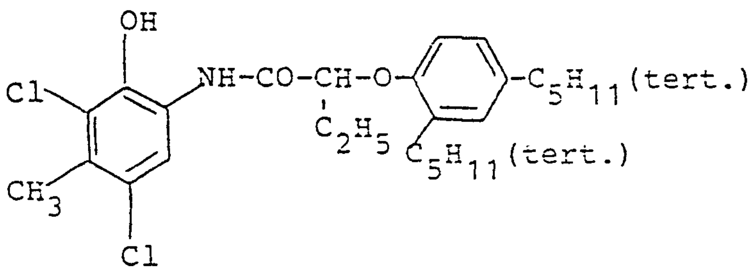

Dispergiermittel ist Di-sec.-butylnaphthalinsulfonsäure-Natriumsalz.

Tabelle 1

| Versuch | (Methode) | VD Ölbildner | HD 100 g Kuppler + Ölbildner | ND Ölbildner | Digestionsstabilität bei 40°C [Tage] |
|---|---|---|---|---|---|
| 2.1.1. | | – | – | – | (ca. 30 Min.) |
| 2. | | – | + 100 g TCP | – | (12 Stunden) |
| 3. | (1.2.) | – | – | 100 g TCP | 2 |
| 4. | (1.2.) | – | – | 100 g DBP | 1 |
| 5. | (1.2.) | – | – | 100 g Verb. 3 | 4 |
| 6. | (1.2.) | – | – | 100 g Verb. 4 | 6 |
| 7. | (1.2.) | – | – | 100 g Verb. 9 | 5 |
| 8. | (1.2.) | – | – | 100 g Verb. 14 | 6 |
| 9. | (1.2.) | – | – | 100 g Verb. 15 | 7 |
| 10. | (1.2.) | – | + 50 g TCP | 50 g Verb. 4 | 8 |
| 11. | (1.2.) | – | + 50 g TCP | 50 g TCP | 3 |
| 12. | (1.2.) | – | + 50 g TCP | 100 g Verb. 4 | 12 |
| 13. | (1.1.) | 100 g Verb. 4 | – | – | 5 |
| 14. | (1.3.) | 20 g Verb. 4 | + 50 g TCP | 50 g Verb. 4 | 11 |
| 15. | (1.3.) | 20 g Verb. 14 | – | 80 g Verb. 15 | 13 |

In dieser und den folgenden Tabellen bedeuten: TCP = Trikresylphosphat, DBP = Dibutylphthalat. Die Verbindungen 3, 4, 9, 14 und 15 entsprechen den Formeln gleicher Numerierung wobei R im Falle der Verbindungen 3, 4, 14 und 15 den $-C_{15}H_{29}$ und im Falle der Verbindung den Rest $C_{18}H_{35}$ bedeutet.

2.2. Beispielreihe 2

Blaugrünkuppler wie bei 2.1.
Dispergiermittel ist Dodecylbenzolsulfonsäure-Natriumsalz.

Tabelle 2

| Versuch | (Methode) | VD Ölbildner | HD 100 g Kuppler + Ölbildner | ND Ölbildner | Digestions-stabilität bei 40°C [Tage] |
|---|---|---|---|---|---|
| 2.2.1. | | – | – | – | (0) |
| 2.2.2. | | – | + 100 g TCP | – | (3 Stunden) |
| 3. | (1.2.) | – | – | 100 g TCP | 1,5 |
| 4. | (1.2.) | – | – | 100 g Verb. 4 | 4 |
| 5. | (1.2.) | – | + 50 g TCP | 50 g TCP | 2 |
| 6. | (1.3.) | 20 g Verb. 4 | + 30 g TCP | 50 g Verb. 4 | 8 |
| 7. | | – | + 100 g Verb. 4 | – | (6 Stunden) |

2.3. Beispielreihe 3

Gelbkuppler der Formel

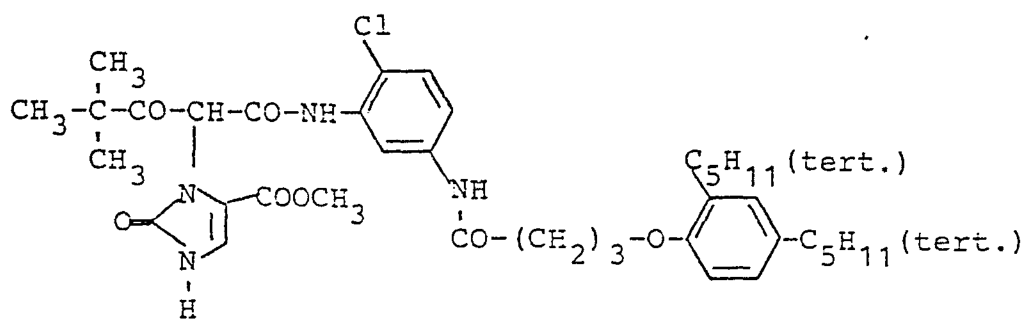

Dispergiermittel ist Di-sec.-butylnaphthalinsulfonsäure-Natriumsalz.

Tabelle 3

| Versuch | (Methode) | VD Ölbildner | HD 100 g Kuppler + Ölbildner | ND Ölbildner | Digestions-stabilität bei 40°C [Tage] |
|---|---|---|---|---|---|
| 2.3.1 | | – | – | – | (1 Stunde) |
| 2.3.2 | | – | + 100 g TCP | – | (10 Stunden) |
| 3. | (1.2.) | – | – | 100 g TCP | 1 |
| 4. | (1.2.) | – | – | 100 g Verb. 4 | 2,5 |
| 5. | (1.2.) | – | + 50 g TCP | 50 g Verb. 4 | 4 |
| 6. | (1.1.) | 90 g Verb. 4 | + 50 g TCP | – | 5 |
| 2.3.7 | | – | + 75 g Verb. 22<br>+ 75 g Verb. 38 | – | 1,5 |
| 2.3.8. | (1.1.) | + 25 g Verb. 22<br>+ 25 g Verb. 38 | + 50 g Verb. 22<br>+ 50 g Verb. 38 | – | 7 |
| 2.3.9 | | – | + 50 g Verb. 27<br>+ 100 g Verb. 34 | – | 1 |
| 2.3.10. | (1.1.) | + 17 g Verb. 27<br>+ 33 g Verb. 34 | + 34 g Verb. 27<br>+ 66 g Verb. 38 | – | 5 |
| 2.3.11. | | – | + 75 g Verb. 23<br>+ 75 g Verb. 34 | – | 1,5 |
| 2.3.12. | (1.1.) | + 25 g Verb. 23<br>+ 25 g Verb. 34 | + 50 g Verb. 23<br>+ 50 g Verb. 34 | – | 8 |

**Patentansprüche**

1. Verfahren zur Herstellung einer Dispersion einer hydrophoben Substanz in einem wäßrigen Medium unter Verwendung eines Ölbildners und eines Hilfslösungsmittels, dadurch gekennzeichnet, daß in einer Hauptdispergierstufe unter Verwendung des Hilfslösungsmittels die Gesamtmenge der hydrophoben Substanz gegebenenfalls zusammen mit einem Teil der Gesamtmenge des Ölbildners in dem wäßrigen Medium dispergiert wird und daß in mindestens einer der Hauptdispergierstufe vor- oder nachgeschalteten weiteren Dispergierstufe mindestens ein Teil der Gesamtmenge des Ölbildners in dem wäßrigen Medium dispergiert wird.

2. Verfahren nach Anspruch 1, dadurch gekennzeichnet, daß mindestens ein Triarylphosphat, ein Dialkylphthalat, ein Monoester der Bernsteinsäure, die in einer $\alpha$-Stellung einen aliphatischen Rest mit mindestens 8 Kohlenstoffatomen trägt, ein Monoester einer hydrierten Phthalsäure und/oder ein aliphatischer oder cycloaliphatischer Alkohol mit mindestens 10 Kohlenstoffatomen als Ölbildner verwendet wird.

3. Verfahren nach Anspruch 2, dadurch gekennzeichnet, daß ein Hydroxymethylderivat des Tricyclo[5.2.1.$0^{2,6}$]decans als Ölbildner verwendet wird.

4. Verfahren nach Anspruch 1, dadurch gekennzeichnet, daß der Ölbildner in mindestens einer der genannten weiteren Dispergierstufen identisch ist mit dem Ölbildner in der Hauptdispergierstufe.

5. Verfahren nach Anspruch 1, dadurch gekennzeichnet, daß der Ölbildner in mindestens einer der genannten weiteren Dispergierstufen verschieden ist von dem Ölbildner in der Hauptdispergierstufe.

6. Verfahren nach einem der Ansprüche 1 bis 5, dadurch gekennzeichnet, daß als Ölbildner in der Vordispergierstufe und/oder in der Nachdispergierstufe ein Monoester der Bernsteinsäure verwendet wird, die in der α-Stellung einen aliphatischen Rest mit mindestens 8 Kohlenstoffatomen trägt.

7. Verfahren nach einem der Ansprüche 1 bis 5, dadurch gekennzeichnet, daß als Ölbildner in der Hauptdispergierstufe Trikresylphosphat oder ein Dialkylphthalat verwendet wird.

8. Verfahren nach einem der Ansprüche 1 bis 5, dadurch gekennzeichnet, daß in der Hauptdispergierstufe und/oder in einer der genannten weiteren Dispergierstufen eine Abmischung von einem Triarylphosphat oder Dialkylphthalat mit einem aliphatischen oder cycloaliphatischen Alkohol mit mindestens 10 Kohlenstoffatomen und/oder mit einem Monoester einer hydrierten Phthalsäure oder der Bernsteinsäure, die in α-Stellung einen aliphatischen Rest mit mindestens 8 Kohlenstoffatomen trägt, als Ölbildner verwendet wird.

9. Verfahren nach einem der Ansprüche 1 bis 5, dadurch gekennzeichnet, daß in der Hauptdispergierstufe und/oder einer der genannten weiteren Dispergierstufen eine Abmischung eines aliphatischen oder cycloaliphatischen Alkohols mit mindestens 10 Kohlenstoffatomen mit einem Monoester der Bernsteinsäure, die in der α-Stellung einen aliphatischen Rest mit mindestens 8 Kohlenstoffatomen trägt, oder einer hydrierten Phthalsäure als Ölbildner verwendet wird.

10. Verfahren nach Anspruch 1, dadurch gekennzeichnet, daß die hydrophobe Substanz ein Farbkuppler ist.

**Claims**

1. Process for the preparation of a dispersion of a hydrophobic substance in an aqueous medium using an oil former and an auxiliary solvent, characterised in that in a main dispersion stage using the auxiliary solvent, the total quantity of the hydrophobic substance, optionally together with part of the total quantity of the oil former, is dispersed in the aqueous medium, and in that in at least one further dispersion stage carried out before or after the main dispersion stage, at least part of the total quantity of the oil former is dispersed in the aqueous medium.

2. Process according to claim 1, characterised in that at least one triarylphosphate, one dialkylphthalate, one monoester of succinic acid carrying, in an α-position, an aliphatic group having at least 8 carbon atoms, one monoester of a hydrogenated phthalic acid and/or one aliphatic or cycloaliphatic alcohol having at least 10 carbon atoms is used as oil former.

3. Process according to claim 2, characterised in that a hydroxymethyl derivative of tricyclo[5.2.1.$0^{2,6}$]decane is used as oil former.

4. Process according to claim 1, characterised in that the oil former in at least one of the above mentioned further dispersion stages is identical to the oil former in the main dispersion stage.

5. Process according to claim 1, characterised in that the oil former in at least one of the above mentioned further dispersion stages is different from the oil former in the main dispersion stage.

6. Process according to one of the claims 1 to 5, characterised in that there is used, as oil former in the predispersion stage and/or in the post dispersion stage, a monoester of succinic acid carrying in the α-position an aliphatic group having at least 8 carbon atoms.

7. Process according to one of the claims 1 to 5, characterised in that as oil former in the main dispersion stage there is used tricresylphosphate or a dialkylphthalate.

8. Process according to one of the claims 1 to 5, characterised in that in the main dispersion stage and/or in one of the above mentioned further dispersion stages there is used, as oil former, a mixture of a triarylphosphate or dialkylphthalate with an aliphatic or cycloaliphatic alcohol having at least 10 carbon atoms and/or with a monoester of a hydrogenated phthalic acid or of succinic acid carrying, in the α-position, an aliphatic group having at least 8 carbon atoms.

9. Process according to one of the claims 1 to 5, characterised in that in the main dispersion stage and/or in one of the above mentioned further dispersion stages there is used, as oil former, a mixture of an aliphatic or cycloaliphatic alcohol having at least 10 carbon atoms with a monoester of succinic acid carrying, in the α-position, an aliphatic group having at least 8 carbon atoms, or of a hydrogenated phthalic acid.

10. Process according to claim 1, characterised in that the hydrophobic substance is a colour coupler.

**Revendications**

1. Procédé de production d'une dispersion d'une substance hydrophobe dans un milieu aqueux en utilisant un agent oléifiant et un solvant auxiliaire, caractérisé en ce que la quantité totale de la substance hydrophobe est dispersée dans le milieu aqueux dans une étape principale de dispersion, en utilisant le solvant auxiliaire, le cas échéant, conjointement avec une partie de la quantité totale de l'agent oléifiant, et au moins une partie de la quantité totale de l'agent oléifiant est dispersée dans le mileu aqueux dans au moins une autre étape de dispersion qui précède ou qui suit l'étape principale de dispersion.

2. Procédé suivant la revendication 1, caractérisé en ce qu'on utilise comme agent oléifiant au moins un phosphate triarylique, un phthalate dialkylique, un mono-ester de l'acide succinique qui porte dans une position $\alpha$ un reste aliphatique ayant au moins 8 atomes de carbone, un mono-ester d'un acide phtalique hydrogéné et/ou un alcool aliphatique ou cycloaliphatique ayant au moins 10 atomes de carbone.

3. Procédé suivant la revendication 2, caractérisé en ce qu'on utilise comme agent oléifiant un dérivé hydroxyméthylique du tricyclo[5.2.1.$0^{2,6}$]décane.

4. Procédé suivant la revendication 1, caractérisé en ce que l'agent oléifiant dans au moins l'une des autres étapes de dispersion mentionnées est identique à l'agent oléifiant dans l'étape principale de dispersion.

5. Procédé suivant la revendication 1, caractérisé en ce que l'agent oléifiant dans au moins l'une des autres étapes de dispersion mentionnées est différent de l'agent oléifiant dans l'étape principale de dispersion.

6. Procédé suivant l'une des revendications 1 à 5, caractérisé en ce qu'on utilise comme agent oléifiant dans l'étape de pré-dispersion et/ou dans l'étape de post-dispersion un mono-ester de l'acide succinique qui porte en position $\alpha$ un reste aliphatique ayant au moins 8 atomes de carbone.

7. Procédé suivant l'une des revendications 1 à 5, caractérisé en ce qu'on utilise le phosphate de tricrésyle ou un phthalate de dialkyle comme agent oléifiant dans l'étape principale de dispersion.

8. Procédé suivant l'une des revendications 1 à 5, caractérisé en ce qu'on utilise comme agent oléifiant dans l'étape principale de dispersion et/ou dans l'une des autres étapes de dispersion mentionnées, un mélange d'un phosphate de triaryle ou d'un phtalate de dialkyle avec un alcool aliphatique ou cycloaliphatique ayant au moins 10 atomes de carbone et/ou avec un mono-ester d'un acide phtalique hydrogéné ou de l'acide succinique qui porte en position $\alpha$ un reste aliphatique ayant au moins 8 atomes de carbone.

9. Procédé suivant l'une des revendications 1 à 5, caractérisé en ce qu'on utilise dans l'étape principale de dispersion et/ou dans l'une des autres étapes de dispersion mentionnées, un mélange d'un alcool aliphatique ou cycloaliphatique ayant au moins 10 atomes de carbone avec un mono-ester de l'acide succinique qui porte en position $\alpha$ un reste aliphatique ayant au moins 8 atomes de carbone, ou d'un acide phtalique hydrogéné.

10. Procédé suivant la revendication 1, caractérisé en ce que la substance hydrophobe est un agent de copulation.